# EUROPÄISCHE PATENTSCHRIFT

(11) **EP 2 619 526 B1**
(45) Veröffentlichungstag und Bekanntmachung des Hinweises auf die Patenterteilung: **02.11.2016**
(21) Anmeldenummer: 10776539.8
(22) Anmeldetag: 20.09.2010
(51) Int. Cl.: G01B 11/26, G02B 27/30, G01B 11/27

(54) **AUTOKOLLIMATIONSFERNROHR MIT KAMERA**
AUTOCOLLIMATOR TELESCOPE HAVING A CAMERA
LUNETTE AUTOCOLLIMATRICE À CAMÉRA

(43) Veröffentlichungstag der Anmeldung: 31.07.2013
(73) Patentinhaber: Trioptics GmbH, 22880 Wedel (DE)
(72) Erfinder: FRANZ, Stefan, 07751 Jena (DE)
(74) Vertreter: Schaller, Renate
(86) Internationale Anmeldenummer: PCT/DE2010/050073
(87) Internationale Veröffentlichungsnummer: WO 2012/037909

(56) Entgegenhaltungen:
- DE-A1-102005 018 983
- DE-B3-102009 012 508
- US-B2- 7 298 468

## Beschreibung

Die Erfindung betrifft ein Autokollimationsfernrohr, wie es gattungsgemäß aus der DE 10 2005 018 983 B4 bekannt ist.

Ein Autokollimationsfernrohr (AKF) besteht aus einem Kollimator und einem Fernrohr, wobei das Fernrohrobjektiv gleichzeitig, als Kollimatorobjektiv dient und diesem gemeinsamen Objektiv über einen Strahlteiler eine Kollimatorbrennebene, oder auch objektseitige Brennebene genannt, und eine Fernrohrbrennebene, oder auch bildseitige Brennebene genannt, zugehörig ist.

Eine in der Kollimatorbrennebene stehende, über einen Kondensor homogen beleuchtete Platte mit einer Messstruktur, wird über das Objektiv ins Unendliche abgebildet und von einem gegebenenfalls hinter dem Objektiv angeordneten, senkrecht zur Objektivachse stehenden, Planspiegel in die Fernrohrbrennebene, die eine konjugierte Ebene zur Kollimatorbrennebene darstellt, projiziert.

Bei einem einfachen Fadenkreuz als Messstruktur, dessen Kreuzungsmittelpunkt auf der optischen Achse des Objektivs liegt, entsteht die Abbildung des Kreuzmittelpunktes in der Fernrohbrennebene ebenfalls auf der optischen Achse.

Wird der Planspiegel verkippt, so wird der Verkippungswinkel als eine Verschiebung des Abbildes des Fadenkreuzes wirksam, d.h. dessen Mittelpunkt wandert mit zunehmender Verkippung aus. Ein AKF ist damit zur Winkelmessung und Justierung optischer Flächen (Messflächen) in einem optischen System einsetzbar.

Zur visuellen Auswertung ist in der Fernrohrbrennebene üblicherweise ein Strichmaßstab vorhanden, der überlagert von der Abbildung der Messstruktur, über ein Okular im Auge des Betrachtes abgebildet wird. Diese Art der Bewertung unterliegt allerdings subjektiven Einflüssen und hat daher auch für viele Anwendungsfälle nicht die ausreichende Genauigkeit.

Höhere Genauigkeiten und die Möglichkeit der Automatisierung sind gegeben, wenn anstelle eines Strichmaßstabes ein opto-elektronischer Empfänger in der Fernrohrbrennebene angeordnet ist. Die Lage des Mittelpunktes des Abbildes der Messstruktur wird dabei durch den Schwerpunkt der auf den Empfänger abgebildeten Beleuchtungsintensität repräsentiert.

Grundsätzlich reicht hierfür bereits ein Empfänger mit einer einzelnen Empfangerfläche, z.B. eine einzelne Fotodiode aus. Der Planspiegel müsste dann solange zur optischen Achse empirisch verkippt werden, bis die Fotodiode einen maximalen Fotostrom liefert.

Praktisch sinnvoller, für einfache Messzwecke, ist die Verwendung von Empfängern mit vier gleichen Einzelempfängerflächen, wie sie z.B. bei einer Vier-Quadranten-Photodiode vorhanden sind. Um die Flächennormale des Planspiegels in Richtung der optischen Achse auszurichten, kann der Planspiegel gezielt verkippt werden, bis alle Quadranten einen gleichen Fotostrom liefern.

Um eine noch höhere Genauigkeit der Lagebestimmung der Abbildung einer Messstruktur und damit eine höhere Auflösung des Verkippungswinkels zu erreichen, ist es bekannt, als Empfänger eine CCD-Zeile oder eine Empfängermatrix zu verwenden. Alle von der Abbildung der Messstruktur betroffenen Pixel liefern dann ein von der jeweils beaufschlagten Beleuchtungsintensität abhängiges Signal. Aus den einzelnen Signalen wird dann der Mittelpunkt der Abbildung der Messstruktur ermittelt. Durch Subpixelinterpolation kann die Auflösung weiter erhöht werden.

Bereits vor einigen Jahrzehnten wurde mit der DE 742 220 C ein Verfahren beschrieben, mit dem unter Verwendung eines AKF Abweichungen zwischen Bildern von Testobjekten gemessen werden konnten. Das von einer Strahlungsquelle entlang einer optischen Achse ausgesendete Licht beleuchtet eine mit einer Messstruktur versehene und in der Kollimatorbrennebene befindliche und eine Apertur aufweisende Platte. Das erzeugte Bild der Messstrukturen wird in ein Linsensystem gerichtet, auf einem reflektierenden Element abgebildet und in eine Empfängerebene zurück reflektiert. Vor der Empfängerebene kann eine zweite Platte mit einer Messstruktur angeordnet sein, die flächen- und abbildungsgleich mit der Messstruktur der ersten Platte ist. Statt zweier Platten mit Messstrukturen kann auch eine einzelne Platte mit Messstrukturen vorhanden sein, die dann zweimal und überlagernd abgebildet werden kann. Die Messstrukturen bedecken die Platten jeweils ganzflächig. Jeder der Ausschnitte einiger der Messstrukturen ist zudem innerhalb der Messstruktur einmalig.

Als Messgröße wird der Grad der Deckung der Abbildungen beider Messstrukturen in der Empfängerebene erfasst, wodurch insbesondere die korrekte Einstellung von in dem Strahlengang enthaltenen Objektiven auf unendlich ferne Gegenstände überprüft werden kann.

Ein Verfahren und Vorrichtungen zur Bestimmung von Winkeln und Winkelabweichungen mittels eines AKF werden weiterhin durch die US 7,298,468 B2 offenbart. Dabei wird entlang einer optischen Achse ein in einer Kollimatorbrennebene angeordneter strahlungsdurchlässiger Schirm (fortan als Platte bezeichnet), der Messstrukturen in Form von Aperturen aufweist, mit einem Strahlenbündel beleuchtet. Die Platte weist eine einstellbare oder variierbare Öffnung (Apertur) auf, mit deren Hilfe die Größe des auf der Platte abgebildeten Bildes an einen Empfänger angepasst werden kann, der in einer definierten Messentfernung in einer in der Fernrohrbrennebene befindlichen Empfängerebene angeordnet ist. Das Bild wird durch ein reflektierendes Element, welches unter einem bestimmten Winkel zur optischen Achse angeordnet ist und zudem der zu messenden Winkeländerung unterliegt, auf dem Empfänger abgebildet. Durch den Empfänger wird das Bild erfasst und ausgewertet. Dabei wird die Abweichung des erfassten Bildes durch Vergleich mit einem Referenzbild oder einem Referenzpunkt bestimmt und eine Winkelabweichung ermittelt. Das vorgeschlagene Verfahren soll sich für einen gegenüber bekannten Verfahren erweiterten Messbereich auch über größere Distanzen zwischen Messobjekt und Empfänger eignen und automatisierbar sein.

Abweichungen zwischen den Positionen von Referenz- und Messpunkten können auch für die Ortsbestimmung einer Messeinrichtung relativ zu einer bestimmten Strahlungsquelle verwendet werden. In der US 4,123,164 wird ein stellares Navigationssystem beschrieben, bei dem Licht einer bestimmten Strahlungsquelle, nämlich eines Sterns, entlang einer optischen Achse auf eine in einer Kollimatorbrennebene befindliche Platte mit einer Apertur, und weiter in ein Linsensystem eines Teleskops gerichtet und durch reflektierende Elemente auf einen Empfänger fokussiert wird. In der vorgeschlagenen Messeinrichtung sind zudem Spiegel als reflektierende Elemente unter präzise definierten Abständen und Winkeln derart angeordnet, dass im korrekt ausgerichteten Zustand des Teleskops zur Strahlungsquelle das kollimierte Licht durch das Linsensystem auf den Empfänger zurück reflektiert und dort als Bild in einer Nominalposition erfasst wird. Abweichungen des Bildes von seiner Nominalposition werden durch den Empfänger erfasst und die der Abweichung zugrunde liegende Winkeländerung berechnet. Anhand dieser Daten kann eine Ortsbestimmung relativ zur Strahlungsquelle und eine neue Ausrichtung des Teleskops erfolgen.

In der DE 10 2005 018 983 B4 wird ein AKF vorgeschlagen, dessen Auflösungsvermögen, auch bei sich verkleinernder Apertur, unbeeinträchtigt hoch bleibt. Die Messstruktur wird mit einem zur Interferenz geeignetem Licht bestrahlt und als eine Phasenmaske ausgebildet, so dass in der Detektorbrennebene, die für ein auf unendlich eingestelltes AKF die Fernrohrbrennebene ist, ein Interferenzbild entsteht.

Die Messstruktur kann bevorzugt aus Längsschlitzen bestehen, kann aber auch aus konzentrisch angeordneten Ringen gebildet sein. Eine als Phasenmaske geeignete Messstruktur muss zwingend eine binäre Struktur aufweisen.

Ein AKF gemäß der DE 10 2005 018 983 B4 soll insbesondere für hochgenaue Messungen geeignet sein, in denen sich die Apertur des AKF's aufgrund unterschiedlich kleiner Messflächen ändert.

Gegenüber AKF's mit einem herkömmlichen Fadenkreuz als Messmarke, wie eingangs beschrieben, bleibt der Messwinkelbereich für einen möglichen Verkippungswinkel der Flächennormalen der Messfläche, gegenüber der optischen Achse des AKF, d.h. der maximale Feldwinkel der gerade noch auf dem Empfänger abgebildet wird, unverändert.

Der Erfindung liegt die Aufgabe zu Grunde, ein AKF dahingehend weiterzubilden, dass der Messwinkelbereich vergrößert wird.

Diese Aufgabe wird durch ein AKF mit den Merkmalen des Anspruches 1 gelöst.

Vorteilhafte Weiterbildungen sind in den Unteransprüchen beschrieben.

Anhand der Zeichnung wird die Vorrichtung im Folgenden beispielhaft näher erläutert.

Es zeigen:
Fig. 1 eine Prinzipskizze für ein AKF mit vorgeordneter Messfläche
Fig. 2a eine erste Ausführung einer Messstruktur
Fig. 2b eine zweite Ausführung einer Messstruktur
Fig. 2c eine dritte Ausführung einer Messstruktur

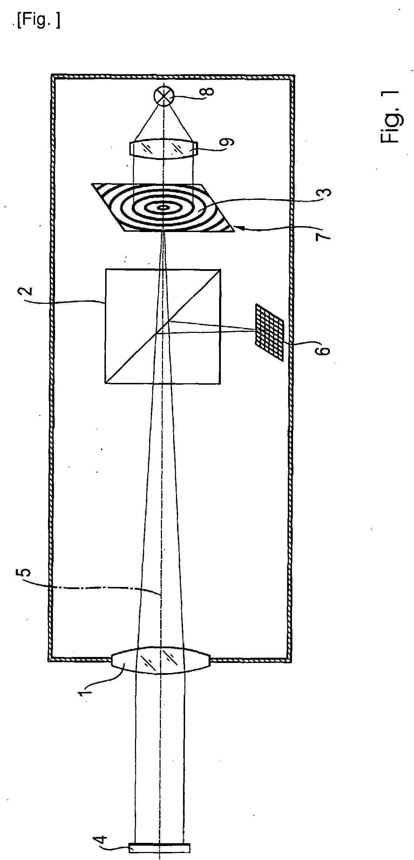

Das in Fig. 1 im Prinzip gezeigte AKF weißt, gleich allen bekannten AKF's, ein Objektiv 1 auf, das sowohl als Kollimatorobjektiv, als auch als Fernrohrobjektiv wirkt.

Innerhalb der Bennweite des Objektives 1 ist ein Strahlteiler 2 angeordnet, hier ein Teilerwürfel. Dieser teilt den Strahlengang in den Kollimatomtrahlengang und den Fernrohrstrahlengang, mit einer Kollimatorbrennebene und einer hierzu konjugierten Fernrohrbrennebene.

In der Kollimatorbrennebene ist eine Platte 7 mit einer Messstruktur 3 angeordnet, die durch den Beleuchtungsstrahl einer Lichtquelle 8, über einen Kondensor 9, homogen beleuchtet wird.

Die Messstruktur 3 wird über das Objektiv 1 ins Unendliche projiziert, an einer dem AKF vorgeordneten Messfläche 4 reflektiert und zurück durch das Objektiv 1 in die Fernrohbrennebene abgebildet.

Sofern die Messfläche 4 gegenüber der optischen Achse 5 des AKF nicht verkippt ist, d.h. ihre Flächennormale in Achsrichtung verläuft, wird die Messstruktur 3 mit einem Abbildungsmaßstab 1:1 quasi in sich selbst auf einer Empfängermatrix 6 abgebildet. In Abhängigkeit vom Verkippungswinkel wandert die Abbildung der Messstruktur 3 auf der Empfängermatrix 6 aus.

Bei einer aus dem Stand der Technik bekannten einfachen Messstruktur gleich einem Fadenkreuz, kann ein Verkippungswinkel nur dann eindeutig erfasst werden, wenn der Mittelpunkt der Messstruktur 3 auf der Empfängermatrix 6 abgebildet wird.

Eine erfindungsgemäße Messstruktur 3 eines AKFs unterscheidet sich zu den aus dem Stand der Technik bekannten Messstrukturen für AKFs, sowohl in ihrer relativen Dimension zur Größe der Empfängermatrix, als auch durch die Gestalt der Struktur.

Im Unterschied zu einer Messstruktur, gebildet durch ein Fadenkreuz, bei dem die Platte 7 im Bereich des Fadenkreuzes einen maximalen Transmissionsgrad aufweist und im umliegenden Bereich einen minimalen Transmissionsgrad hat, hat eine erfindungsgemäße Messstruktur eine Vielzahl von benachbarten Bereichen unterschiedlichen Transmissionsgrades.

Es ist erfindungswesentlich, dass die Messmarke 3 größer als die Empfängermatrix 6 ist, sodass unabhängig vom Verkippungswinkel der Messfläche 4 höchstens ein Ausschnitt der Messstruktur auf der Empfängermatrix 6 abgebildet wird.

Da die Messstruktur 3 in einem Abbildungsmaßstab von 1:1 auf der Empfängermatrix 6 abgebildet wird, ist dieser Ausschnitt in seiner Größe und Form gleich der Größe und Form der Empfängermatrix 6.

Die Messstruktur 3 bedeckt die Platte 7 ganzflächig, womit die Kantenlängen der Platte 7 die Ausdehnung der Messstruktur 3 bestimmen.

Vorteilhaft weist die Messstruktur 3 eine dreifache Kantenlänge von der Empfängermatrix 6 auf, womit sich der Messwinkelbereich verdreifachen lässt.

Im Zusammenhang mit der Vergrößerung der Messstruktur ist es weiter erfindungswesentlich, dass die Messstruktur so gestaltet ist, dass jeder Ausschnitt innerhalb der Messstruktur einmalig und damit in seiner Lage innerhalb der Messstruktur eindeutig identifizierbar ist.

Z. B. kann die Messstruktur ein Raster aus Bereichen, wie z.B. Rechtecke sein, die zueinander nichtäquidistante Abstände aufweisen. Andere vorteilhafte Messstrukturen sind konzentrische Ringe, eine Spirale, unregelmäßige Muster oder Zufalls- bzw. Chaosmuster.

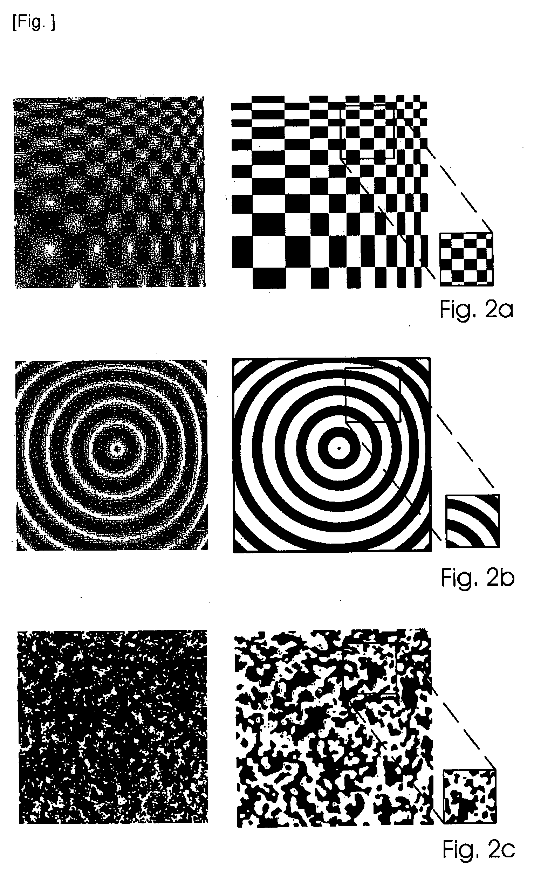

Beispiele solcher Messstrukturen sind in den Fig. 2a-2c jeweils als analoge und als binäre Messstruktur gezeigt. Die dargestellten Auszüge aus den Messstrukturen sind mögliche Ausschnitte, wie sie auf dem Empfänger abgebildet werden können.

Da jeder Ausschnitt einmalig ist und damit eindeutig identifizierbar innerhalb der Messstruktur der Abbildung der Messmarke ist, lässt sich seine Position innerhalb der Abbildung der Messstruktur exakt bestimmen. Dazu ist eine Bildauswerte-Software vorhanden, die den von der Empfängermatrix 6 erfassten Ausschnitt innerhalb des abgespeicherten Abbildes der Messstruktur 3 sucht um rechnerisch den Mittelpunkt der Abbildung der Messstruktur 3 zu ermitteln und dessen Ablage gegenüber der optischen Achse 5 festzustellen.

Als Empfängermatrix 6 wird üblicherweise eine CCD-Matrix verwendet.

In dem die Messstruktur so ausgeführt ist, dass sie die Platte 7 vollständig abdeckt, werden auch alle Pixel der CCD-Matrix von der Abbildung der Messstruktur überdeckt.

Damit möglichst viele, idealerweise alle Pixel der CCD-Matrix zur Ermittlung des Mittelpunktes des abgebildeten Ausschnittes und damit zur Lagebestimmung der Abbildung beitragen können, ist es von Vorteil, dass benachbarte Pixel mit einer unterschiedlichen Strahlungsintensität beaufschlagt werden.

Zu diesem Zweck ist die Messstruktur vorteilhaft eine analoge Messstruktur, deren benachbarte Bereiche sich durch einen gemittelten Transmissionsgrad unterscheiden, wodurch die Abbildung der Messstruktur auf den Pixeln Signale, theoretisch unendlich vieler, unterschiedlicher Grauwerte bewirken kann.

Vorteilhaft sind diese Bereiche, in einem gedachten Raster der Pixelanordnung der CCD-Matrix eine Rasterfläche bildend, nicht größer als ein Pixel, wodurch gesichert jedes benachbarte Pixel mit einer anderen Strahlungsintensität beaufschlagt wird und zur Auswertung herangezogen werden kann.

Einfacher herstellen lassen sich binäre Messstrukturen. Sie bewirken eine Abbildung mit nur zwei Grauwertstufen, getrennt von scharfen Bereichsübergängen.

Vorteilhaft sind auch hier die Bereiche der beiden Grauwertstufen jeweils so dimensioniert, das möglichst wenige nebeneinander liegende Pixel von der Abbildung eines solchen Bereiches überdeckt werden. Je mehr Bereichsübergänge von den Pixeln detektiert werden, desto genauer lässt sich die Lage der Abbildung bestimmen.

Im Unterschied zum Stand der Technik können für eine Subpixelinterpolation alle Pixel bzw. der durch sie gebildeten Signale verwendet werden, was eine hochgenaue Lagebestimmung erlaubt.

Gemeinsam führen der vergrößerte Messwinkelbereich und die höhere Auflösung der noch erkennbaren Verkippungswinkeländerung zu der Erhöhung des Dynamikbereiches des AKF's.

### Bezugszeichenliste

- 1.: Objektiv
- 2.: Strahlteiler
- 3.: Messstruktur
- 4.: Messfläche
- 5.: Optische Achse
- 6.: Empfängermatrix
- 7.: Platte
- 8.: Lichtquelle
- 9.: Kondensor

## Patentansprüche

1. Autokollimationsfemrohr, eine optische Achse (5) aufweisend, mit
einer in der Kollimatorbrennebene angeordneten, beleuchteten Platte (7) mit einer Messstruktur (3), gebildet durch Bereiche unterschiedlichen Transmissionsgrades und einer in der Fernrohrbrennebene angeordneten Empfängermatrix (6), sodass die Abbildung der Messstruktur (3), in Abhängigkeit des Verkippungswinkels, gegenüber der optischen Achse (5) einer dem Autokollimationsfernrohr vorgeordneten Messfläche (4) auf der Empfängermatrix (6) verschoben abgebildet wird, **dadurch gekennzeichnet,**
**dass** die Messstruktur (3) größer als die Empfängermatrix (6) ist, womit nur ein Ausschnitt der Messstruktur auf der Empfängermatrix (6) abgebildet wird,
**dass** jeder Ausschnitt innerhalb der Messstruktur einmalig und damit in seiner Lage innerhalb der Messstruktur eindeutig durch die Empfängermatrix (6) identifizierbar ist und dass die Platte (7) ganzflächig von der Messstruktur (3) bedeckt ist.

2. Autokollimationsfernrohr nach Anspruch 1, **dadurch gekennzeichnet, dass** die Messstruktur eine analoge Messstruktur ist.

3. Autokollimationsfernrohr nach Anspruch 2, **dadurch gekennzeichnet, dass** die Bereiche der Messstruktur (3), in einem gedachten Raster der Pixelanordnung der Empfängermatrix (6) eine Rasterfläche bildend, nicht größer als ein Pixel der Empfängermatrix (6) sind, wodurch gesichert jedes benachbarte Pixel mit einer anderen Strahlungsintensität beaufschlagt wird und zur Auswertung herangezogen werden kann.

4. Autokollimationsfernrohr nach Anspruch 1, **dadurch gekennzeichnet, dass** die Messstruktur eine binäre Messstruktur ist.

5. Autokollimationsfernrohr nach Anspruch 1, 2 oder 4, **dadurch gekennzeichnet,**
**dass** die Messstruktur eine aus Rechtecken gebildete Rasterstruktur mit äquidistanten Abständen ist.

6. Autokollimationsfernrohr nach Anspruch 1, **dadurch gekennzeichnet, dass** die Messstruktur eine Spirale ist.

7. Autokollimationsfernrohr nach Anspruch 1, **dadurch gekennzeichnet, dass** die Messstruktur ein unregelmäßiges Muster ist.

8. Autokollimationsfernrohr nach Anspruch 1, **dadurch gekennzeichnet, dass** die Messstruktur konzentrische Ringe sind.

9. Autokollimationsfernrohr nach Anspruch 1, **dadurch gekennzeichnet, dass** die Messmarke mehr als doppelt so groß wie der Empfänger ist.

## Claims

1. Autocollimator telescope, having an optical axis (5), comprising an illuminated plate (7) arranged in the collimator focal plane, said plate (7) having a measurement structure (3) which is formed by regions of different transmittance, and a receiver matrix (6) arranged in the telescope focal plane, such that, depending on the tilt angle, the representation of the measurement structure (3) is imaged on the receiver matrix (6) in a displaced manner with respect to the optical axis (5) of a measurement surface (4) arranged upstream of the autocollimator telescope, **characterized in that**
the measurement structure (3) is greater than the receiver matrix (6), whereby only one section of the measurement structure is imaged on the receiver matrix (6), each section within the measurement structure can be identified once and therefore can be uniquely identified by the receiver matrix (6) in its position within the measurement structure and that the entire surface of the plate (7) is covered by the measurement structure (3).

2. Autocollimator telescope according to claim 1, **characterized in that** the measurement structure is an analogue measurement structure.

3. Autocollimator telescope according to claim 2, **characterized in that** the regions of the measurement structure (3), forming a grid surface in an imaginary grid of the pixel arrangement of the receiver matrix (6), are not greater than a pixel of the receiver matrix (6), whereby it is assured that a different radiation intensity is applied to each adjacent pixel and each adjacent pixel can be used for evaluation.

4. Autocollimator telescope according to claim 1, **characterized in that** the measurement structure is a binary measurement structure.

5. Autocollimator telescope according to claim 1, 2 or 4, **characterized in that** the measurement structure is a grid structure formed by rectangles with equidistant distances.

6. Autocollimator telescope according to claim 1, **characterized in that** the measurement structure is a spiral.

7. Autocollimator telescope according to claim 1, **characterized in that** the measurement structure is an irregular pattern.

8. Autocollimator telescope according to claim 1, **characterized in that** the measurement structure is formed by concentric rings.

9. Autocollimator telescope according to claim 1, **characterized in that** measurement mark is more than twice the size of the receiver.

## Revendications

1. Lunette autocollimatrice, ayant un axe optique (5), comprenant une plaque (7) illuminée disposée dans le plan focal du collimateur, ladite plaque (7) ayant une structure de mesure (3) qui est formée de régions de transmittance différente, et une matrice de réception (6) disposée dans le plan focal de la lunette, de façon que, en fonction de l'angle d'inclinaison, la représentation de la structure de mesure (3) est imagée sur la matrice de réception (6) d'une manière déplacée par rapport à l'axe optique (5) d'une surface de mesure (4) disposée en amont de la lunette autocollimatrice, **caractérisée en ce que**
la structure de mesure (3) est plus grande que la matrice de réception (6) et ainsi il n'y a qu'une partie de la structure de mesure qui est représentée sur la matrice de réception (6),
chaque partie à l'intérieur de la structure de mesure peut être identifiée de façon unique et donc peut être identifiée de manière univoque par la matrice de réception (6) dans sa position à l'intérieur de la structure de mesure et que la surface entière de la plaque (7) est couverte de la structure de mesure (3).

2. Lunette autocollimatrice selon la revendication 1, **caractérisée en ce que** la structure de mesure est une structure de mesure analogique.

3. Lunette autocollimatrice selon la revendication 2, **caractérisée en ce que** les régions de la structure de mesure (3), formant une surface de grille dans une grille imaginaire de l'agencement de pixel de la matrice de réception (6), ne sont pas plus grandes qu'un pixel de la matrice de réception (6), donc il est assuré qu'une intensité de rayonnement différente est appliquée à chaque pixel adjacent et chaque pixel adjacent peut être utilisé pour l'évaluation.

4. Lunette autocollimatrice selon la revendication 1, **caractérisée en ce que** la structure de mesure est une structure de mesure binaire.

5. Lunette autocollimatrice selon la revendication 1, 2 ou 4, **caractérisée en ce que** la structure de mesure est une structure de grille formée de rectangles avec des distances équidistantes.

6. Lunette autocollimatrice selon la revendication 1, **caractérisée en ce que** la structure de mesure est une spirale.

7. Lunette autocollimatrice selon la revendication 1, **caractérisée en ce que** la structure de mesure est un motif irrégulier.

8. Lunette autocollimatrice selon la revendication 1, **caractérisée en ce que** la structure de mesure est formée de cercles concentriques.

9. Lunette autocollimatrice selon la revendication 1, **caractérisée en ce que** la marque de mesure est plus que deux fois plus grande que le récepteur.
